# EUROPÄISCHE PATENTANMELDUNG

(11) **EP 0 893 085 A1**
(43) Veröffentlichungstag der Anmeldung: **27.01.1999**
(21) Anmeldenummer: 98108735.6
(22) Anmeldetag: 14.05.1998
(51) Int. Cl.: A47J 31/20

(54) **Vorrichtung zur Herstellung von Aromaauszügen**

(30) Priorität: 25.07.1997 DE 29713263 U
(71) Anmelder: MELITTA HAUSHALTSPRODUKTE GmbH & Co. Kommanditgesellschaft, D-32427 Minden (DE)
(72) Erfinder: Perkovic, Josip, 32425 Minden (DE); Sachtleben, Andreas, 32427 Minden (DE)
(74) Vertreter: Stracke, Alexander, Dipl.-Ing.

(57) **Zusammenfassung**

Gegenstand der Erfindung ist eine Vorrichtung zur Herstellung von Aromaauszügen, insbesondere aus Kaffee oder Tee.

Die Vorrichtung umfaßt ein in seinem unteren Endberich mit einer verschließbaren Auslaßöffnung (2) versehenes Gefäß zur Aufnahme eines zu extrahierenden Aromaträgers und einer Extraktionsflüssigkeit, wobei zwischen dem die Extraktionsflüssigkeit aufnehmenden Raum des Gefäßes und dessen Auslaßöffnung (2) eine Filtereinrichtung angeordnet ist.

Erfindungsgemäß ist zumindest derjenige Bereich des Gefäßes, der zur Aufnahme des Aromaträgers und der Extraktionsflüssigkeit dient, allseitig geschlossen und das Gefäß (1) ist mit einer Belüftungsöffnung (9) oder mit einem verschiebbaren Kolben versehen, so daß nach Freigabe der Auslaßöffnung (2) eine Entleerung des Gefäßes (1) möglich ist.

Hierdurch wird der Vorteil erreicht, daß die Extraktionsflüssigkeit über einen individuell gewünschten Zeitraum hinweg in Kontakt mit dem zu extrahierenden Aromaträger belassen werden kann. Erst dann, wenn der Benutzer die Entnahme des Aromaauszuges wünscht, wird die Auslaßöffnung (2) des Gefäßes (1) freigegeben und der Aromaauszug kann aufgrund der Schwerkraft auslaufen oder über einen Kolben aus dem Gefäß (1) herausgeschoben werden.

Das Gefäß kann aufgrund der Tatsache, daß Aromaträger und Extraktionsflüssigkeit allseitig geschlossen aufgenommen sind, geschüttelt oder anderweitig bewegt werden, so daß eine intensive Durchwirbelung und Kontaktierung von Aromaträger und Extraktionsflüssigkeit herbeigeführt werden kann.

## Beschreibung

Die vorliegende Erfindung betrifft eine Vorrichtung zur Herstellung von Aromaauszügen, insbesondere aus Kaffee oder Tee, umfassend ein in seinem unteren Endbereich mit einer verschließbaren Auslaßöffnung versehenes Gefäß zur Aufnahme eines zu extrahierenden Aromaträgers und einer Extraktionsflüssigkeit, wobei zwischen dem die Extraktionsflüssigkeit aufnehmenden Raum des Gefäßes und dessen Auslaßöffnung eine Filtereinrichtung angeordnet ist.

Vorrichtungen der gattungsgemäßen Art sind an sich bekannt.

So sind beispielsweise derartige Vorrichtungen zur Herstellung von Aromaauszügen aus Kaffee oder Tee bekannt, die aus einem Filtergefäß und einem diesem Filtergefäß angepaßten Filterpapiereinsatz bestehen. Das Filtergefäß ist ebenso wie der angepaßte Filterpapiereinsatz im wesentlichen als nach oben offener Trichter ausgebildet. Nach dem Einbringen des Filterpapiereinsatzes in das Filtergefäß wird in den Filterpapiereinsatz ein Aromaträger eingefüllt und anschließend von Hand oder über einen automatisch gesteuerten Zulauf heißes Wasser in die Filtervorrichtung gebracht. Das heiße Wasser löst Aromastoffe aus dem Aromaträger und fließt dann als trinkfähiger Kaffee oder Tee in einen unter die gesamte Filtervorrichtung gebrachten Aufnahmebehälter.

Der vorliegenden Erfindung liegt die Aufgabe zugrunde, eine Vorrichtung der gattungsgemäßen Art zu schaffen, die eine individuelle Beeinflussung der Kontaktzeit der Extraktionsflüssigkeit mit dem zu extrahierenden Aromaträger ermöglicht.

Diese Aufgabe wird erfindungsgemäß dadurch gelöst, daß zumindest derjenige Bereich des Gefäßes, der zur Aufnahme des Aromaträgers und der Extraktionsflüssigkeit dient, allseitig geschlossen ist und daß das Gefäß mit einer Belüftungsöffnung oder mit einem verschiebbaren Kolben versehen ist, so daß nach Freigabe der Auslaßöffnung eine Entleerung des Gefäßes ermöglicht ist.

Eine derart konzipierte Vorrichtung ermöglicht es, die Extraktionsflüssigkeit über einen individuell gewünschten Zeitraum hinweg in Kontakt mit dem zu extrahierenden Aromaträger zu belassen. Erst dann, wenn der Benutzer die Entnahme des Aromaauszuges wünscht, wird die Auslauföffnung des Gefäßes freigegeben und der Aromaauszug kann aufgrund der Schwerkraft auslaufen oder über einen Kolben aus dem Gefäß herausgeschoben werden.

Da derjenige Bereich des Gefäßes, der den Aromaträger und die Extraktionsflüssigkeit aufnimmt, allseitig geschlossen ist, kann ein Schütteln oder Bewegen des Gefäßes durchgeführt werden, so daß eine intensive Durchwirbelung und Kontaktierung von Aromaträger und Extraktionsflüssigkeit herbeigeführt wird mit dem Erfolg, daß eine hohe Ausnutzung der Aromastoffe des Aromaträgers herbeigeführt wird.

Sofern das Gefäß durch einen Kolben entleerbar ist, kann auch der Durchlauf der Extraktionsflüssigkeit durch den Aromaträger beträchtlich verkürzt werden, so daß letztendlich vom jeweiligen Benutzer festgelegt bzw. bestimmt werden kann, wie lange die Extraktionsflüssigkeit mit dem zu extrahierenden Aromaträger in Kontakt bleibt.

Bei einem Gefäß mit einer Belüftungsöffnung kann an diese Belüftungsöffnung eine Leitung angeschlossen werden, über die Druckluft in den oberhalb des Flüssigkeitsspiegels im Behälter liegenden Raum eingebracht werden kann. Durch diese Druckluft kann ebenfalls der Auslauf der Extraktionsflüssigkeit aus dem Gefäß beschleunigt werden.

Denkbar ist auch, das Gefäß zumindest in wesentlichen Bereichen aus flexiblem Material herzustellen und den Auslauf der Extraktionsflüssigkeit durch Zusammendrücken des flexiblen Gefäßabschnittes zu beschleunigen.

Weitere Merkmale der Erfindung sind Gegenstand weiterer Unteransprüche und ergeben sich aus der nachfolgenden Beschreibung der in den Zeichnungen dargestellten Ausführungsbeispiele.

Es zeigen:
- Figur 1: einen Vertikalschnitt durch eine Vorrichtung zur Herstellung von Aromaauszügen gemäß vorliegender Erfindung,
- Figur 2: einen Vertikalschnitt durch eine Vorrichtung nach einem weiteren Ausführungsbeispiel der Erfindung,
- Figur 3: eine erfindungsgemäße Vorrichtung in einem Vertikalschnitt,
- Figur 4: einen Vertikalschnitt durch eine weitere Vorrichtung nach der vorliegenden Erfindung,
- Figur 5: einen Vertikalschnitt durch eine erfindungsgemäße Vorrichtung mit einem Gefäß aus einem flexiblen Material.

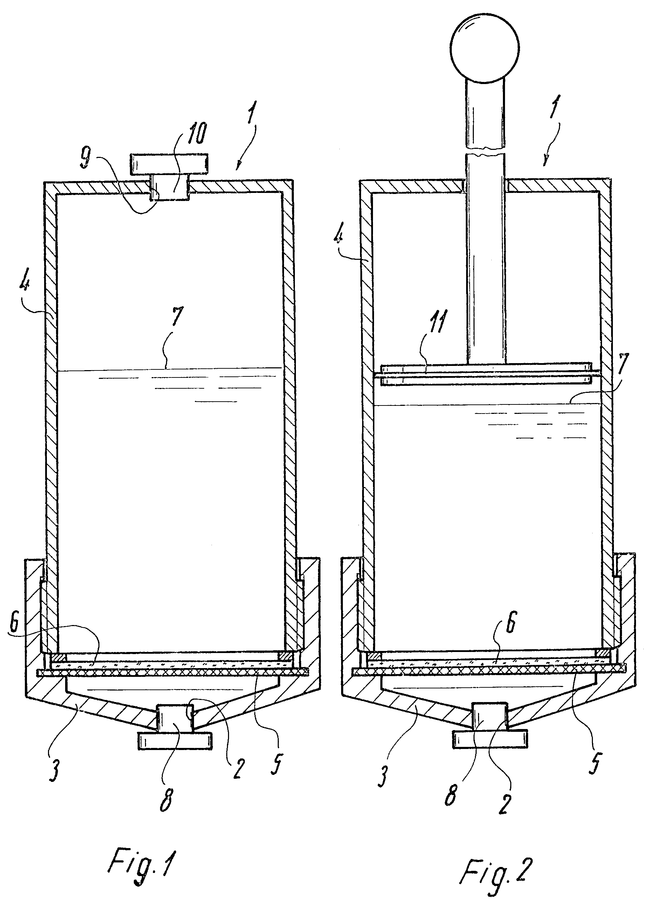

Die in Figur 1 dargestellte Vorrichtung zur Herstellung von Aromaauszügen, insbesondere aus Kaffee oder Tee, umfaßt ein insgesamt mit dem Bezugszeichen 1 versehenes Gefäß zur Aufnahme eines zu extrahierenden Aromaträgers und einer Extraktionsflüssigkeit. Dieses Gefäß 12 ist in seinem unteren Endbereich mit einer verschließbaren Auslaßöffnung 2 versehen.

Das Gefäß 1 ist im wesentlichen insgesamt zweiteilig ausgebildet und besteht aus einem Unterteil 3, welches die schon erwähnte, verschließbare Auslaßöffnung 2 aufweist und aus einem Oberteil 4. Das Unterteil 3 ist mit dem Oberteil 4 lösbar verbunden, beispielsweise kann das Unterteil 3, wie in Figur 1 dargestellt, auf das Oberteil 4 aufgeschraubt sein oder durch eine Bajonettverbindung mit diesem Oberteil 4 verbunden sein. Auch andere Verbindungsarten sind denkbar.

Das Unterteil 3 nimmt im dargestellten Ausführungsbeispiel eine sieb- oder gitterartige Scheibe 5 auf, auf welche ein Filterpapier 6 aufgelegt werden kann. Dieses Filterpapier 6 dient dann letztendlich als bodenseitige Trägerschicht für einen in das Gefäß 1 eingefüllten Aromaträger, wie z. B. Kaffeemehl oder Tee.

Das Gefäß 1 ist nach dem Verbinden von Unterteil 3 und Oberteil 4 praktisch allseitig geschlossen.

Zum Befüllen des Gefäßes 1 mit einer Extraktionsflüssigkeit, beispielsweise mit heißem Wasser 7 sowie zum Einfüllen von Kaffee oder Tee oder einem anderen Aromaträger wird das Unterteil 3 vom Oberteil 4 abgenommen. Nun kann Heißwasser 7 und beispielsweise Kaffeemehl eingefüllt werden, anschließend wird das Unterteil 3 wieder mit dem Oberteil 4 flüssigkeitsdicht verbunden. Da das Gefäß 1 zumindest in demjenigen Bereich, der zur Aufnahme des Aromaträgers und der Extraktionsflüssigkeit dient, allseitig geschlossen ist, kann zunächst keine Flüssigkeit aus dem Gefäß 1 austreten. Dies eröffnet die Möglichkeit, das ganze Gefäß 1 zu schütteln und einen intensiven Kontakt bzw. eine intensive Durchwirbelung des Aromaträgers mit der Extraktionsflüssigkeit zu bewirken.

Soll nach einer vom Benutzer vorbestimmten Verweildauer der Extraktionsflüssigkeit im Gefäß 1 der erzeugte Aromaauszug in ein (nicht dargestelltes) Aufnahmebehältnis abgegeben werden, wird die Auslaßöffnung 2 geöffnet. Im dargestellten Ausführungsbeispiel ist aus Gründen der Vereinfachung ein Verschlußstopfen 8 dargestellt, der die Auslaßöffnung 2 verschließen kann. Selbstverständlich sind andere Verschlußeinrichtungen zur Öffnung und zum Verschließen der Auslaßöffnung 2 denkbar.

Damit im Falle des Ausführungsbeispieles gemäß Figur 1 eine Entleerung des Gefäßes 1 nach Freigabe der Auslaßöffnung 2 möglich ist, ist das Gefäß 1 in seinem oberen, der Auslaßöffnung 2 gegenüberliegenden Endbereich mit einer Belüftungsöffnung 9 versehen, die ebenfalls durch einen Stopfen 10 bei Bedarf verschließbar ist. Dieser Stopfen 10 wird zum Zwecke der Entleerungsmöglichkeit des Gefäßes 1 abgenommen, so daß dann die Extraktionsflüssigkeit aus dem Gefäß 1 durch die Auslaßöffnung 2 in einen bereitgestellten Aufnahmebehälter ablaufen kann.

Beim Ausführungsbeispiel gemäß Figur 2 ist der grundsätzliche Aufbau der gesamten Vorrichtung weitestgehend derselbe wie beim Ausführungsbeispiel gemäß Figur 1.

Abweichend von der Konstruktion nach Figur 1 ist bei der Vorrichtung nach Figur 2 allerdings, daß im Oberteil 4 des Gefäßes 1 ein verschiebbarer Kolben 11 eine Begrenzungswand desjenigen Bereiches bildet, der zur Aufnahme des Aromaträgers und der Extraktionsflüssigkeit dient. Der Kolben 11 ist mit einem handbetätigten Stößel 12 ausgestattet, der aus dem Gefäß 1 nach außen herausragt.

Die Vorrichtung gemäß Figur 2 wird dadurch entleert, daß nach Freigabe der Auslaßöffnung 2 der Kolben 11 nach unten, d. h. in Richtung der Auslaßöffnung 2, verschoben wird. Mit anderen Worten wird die Extraktionsflüssigkeit durch den Druck des Kolbens 11 aus dem Gefäß 1 herausgeschoben. Die Extraktionsgeschwindigkeit kann hierdurch beträchtlich erhöht werden.

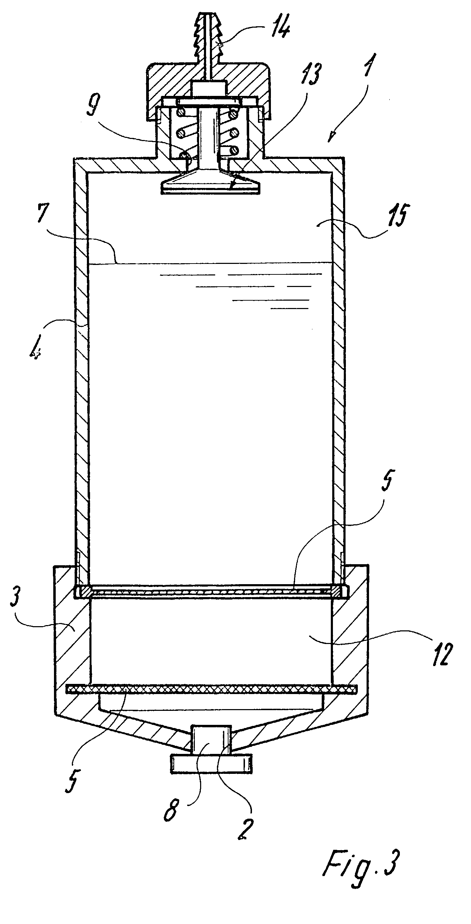

Auch beim Ausführungsbeispiel der Erfindung gemäß Figur 3 ist das Gefäß 1 aus einem Unterteil 3 und einem Oberteil 4 gebildet, wobei diese beiden Teile flüssigkeitsdicht miteinander verbindbar sind. Im Unterteil 3 ist beim Ausführungsbeispiel gemäß Figur 3 eine durch zwei Siebe 5 begrenzte Filterkammer 12 vorgesehen, in die beispielsweise ein mit einem Aromaträger gefüllter, aus einem Filterpapier bestehender Beutel eingefüllt werden kann.

Eine weitere Abweichung der Konstruktion gemäß der Figur 3 gegenüber den vorher beschriebenen Ausführungsbeispielen besteht darin, daß die im oberen Endbereich des Gefäßes 1 befindliche Belüftungsöffnung 9 durch ein Rückschlagventil 13 geschlossen und über einen Anschlußstutzen 14 an eine nicht weiter dargestellte Druckluftquelle anschließbar ist.

Die Vorrichtung gemäß Figur 3 kann nach Freigabe der Auslaßöffnung 2 dadurch schnell entleert werden, daß über den Anschlußstutzen 4 Druckluft in den oberhalb des Flüssigkeitsspiegels befindlichen Raum 15 des Gefäßes eingeführt wird, wobei dann das Rückschlagventil 13 die Belüftungsöffnung 9 freigibt. Durch den Luftdruck wird dann die Extraktionsflüssigkeit aus dem Gefäß 1 ausgetrieben. Auch hier kann je nach Höhe des aufgebrachten Luftdruckes eine mehr oder weniger schnelle Entleerung und damit eine Beeinflussung der Extraktionsgeschwindigkeit gewählt werden.

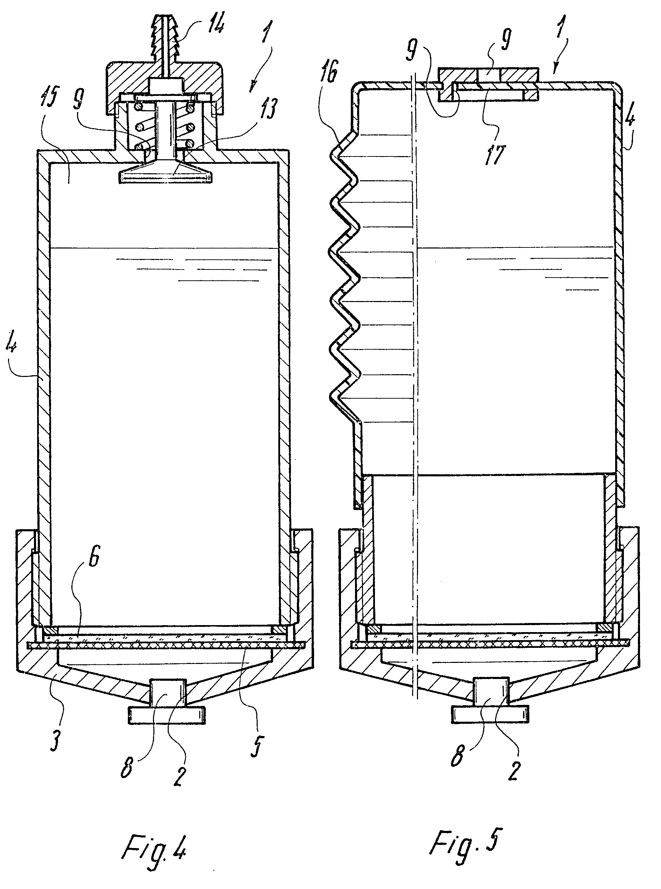

Das Ausführungsbeispiel gemäß Figur 4 entspricht im wesentlichen dem Aufbau des Ausführungsbeispieles gemäß Figur 1 mit dem Unterschied, daß die Belüftungsöffnung 9 entsprechend dem Ausführungsbeispiel gemäß Figur 3 mit einem Rückschlagventil 13 verschlossen ist und über einen Anschlußstutzen 14 an eine Druckluftleitung angeschlossen werden kann.

Das Unterteil 3 des Gefäßes 1 weist ebenso wie beim Ausführungsbeispiel nach Figur 1 eine Siebscheibe 5 zur Aufnahme eines Filterpapieres 6 auf.

In Figur 5 ist eine Variante der erfindungsgemäßen Vorrichtung gezeigt, bei der zumindest das Oberteil 4 des Gefäßes 1 aus einem flexiblen Material besteht, wobei, wie in der linken Hälfte der Figur 5 angedeutet, dieses Oberteil 4 die Form eines Faltenblages 16 aufweisen kann.

Die im oberen Endbereich des Oberteiles 4 vorgesehene Belüftungsöffnung 9 ist durch einen aus dem flexiblen Material des Oberteiles 4 bestehenden Ventillappen 17 verschlossen.

Wird das Gefäß 1 zusammengedrückt, ist auch Druck auf dem Ventillappen 17 und das Ventil ist geschlossen.

Wenn sich das Gefäß 1 anschließend wieder entspannt, öffnet das Ventil und Luft kann das verdrängte Flüssigkeitsvolumen wieder auffüllen, so daß das Gefäß 1 wieder seine Ausgangsform annimmt und erneut zusammengedrückt werden kann.

Es versteht sich, daß die Erfindung nicht auf die in den dargestellten Ausführungsbeispielen gezeigten Konstruktionsformen beschränkt ist.

So können selbstverständlich alle gezeigten Ausführungsformen mit einer Filterkammer 12 im Sinne des Ausführungsbeispieles nach Figur 3 ausgestattet sein oder eben eine Filterpapierauflage aufweisen, wie in den übrigen Ausführungsbeispielen. Das Gleiche gilt für die Gestaltung der oberen Belüftungsöffnung 9 und deren Verschlußeinrichtung. Hier können Verschlußstopfen oder Rückschlagventile oder Ventilklappen Verwendung finden.

Die Gefäße können unabhängig von der vorher beschriebenen Konstruktion mit in Längsrichtung, also parallel zur Längsachse der Auslaßöffnung 12 verlaufenden Stützfüßen ausgestattet sein, um diese Gefäße 1 nicht nur bequemer handhaben und abstellen zu können, sondern bei entsprechender Höhengestaltung dieser Füße die Gefäße 1 auch über einen Aufnahmebehälter für die hergestellten Aromaauszüge abzustellen.

## Patentansprüche

1. Vorrichtung zur Herstellung von Aromaauszügen, insbesondere aus Kaffee oder Tee, umfassend ein in seinem unteren Endbereich mit einer verschließbaren Auslaßöffnung versehenes Gefäß zur Aufnahme eines zu extrahierenden Aromaträgers und einer Extraktionsflüssigkeit, wobei zwischen dem die Extraktionsflüssigkeit aufnehmenden Raum des Gefäßes und dessen Auslaßöffnung eine Filtereinrichtung angeordnet ist, **dadurch gekennzeichnet, daß** zumindest derjenige Bereich des Gefäßes (1), der zur Aufnahme des Aromaträgers und der Extraktionsflüssigkeit dient, allseitig geschlossen ist und daß das Gefäß (1) mit einer Belüftungsöffnung (9) oder mit einem verschiebbaren Kolben versehen ist, so daß nach Freigabe der Auslaßöffnung (2) eine Entleerung des Gefäßes (1) ermöglicht ist.

2. Vorrichtung nach Anspruch 1, **dadurch gekennzeichnet, daß** das Gefäß (1) aus einem Unterteil (3) und einem Oberteil (4) besteht, wobei das Unterteil (3) die verschließbare Auslauföffnung (2) aufweist und das Unterteil (3) flüssigkeitsdicht mit dem Oberteil (4) verbindbar ist.

3. Vorrichtung nach Anspruch 2, **dadurch gekennzeichnet, daß** das Unterteil (3) mit einer Siebscheibe (5) zur Abstützung eines Filterpapieres (6) ausgestattet ist.

4. Vorrichtung nach Anspruch 2, **dadurch gekennzeichnet, daß** das Unterteil (3) eine durch zwei Siebscheiben (5) begrenzte Filterkammer (12) zur Aufnahme eines in einem Filterpapier verpackten Aromaträgers dienende Filterkammer (12) aufweist.

5. Vorrichtung nach einem oder mehreren der vorhergehenden Ansprüche, **dadurch gekennzeichnet, daß** die Belüftungsöffnung (9) des Gefäßes (1) durch einen Stopfen (10) verschlossen ist.

6. Vorrichtung nach einem oder mehreren der Ansprüche 1-5, **dadurch gekennzeichnet, daß** die Belüftungsöffnung (9) des Gefäßes (1) durch ein Rückschlagventil (13) verschlossen und über einen Anschlußstutzen (14) an eine Druckluftquelle anschließbar ist.

7. Vorrichtung nach einem oder mehreren der Ansprüche 1-5, **dadurch gekennzeichnet, daß** die Belüftungsöffnung (9) des Gefäßes (1) durch einen Ventillappen (17) aus einem flexiblen Material verschlossen ist.

8. Vorrichtung nach einem oder mehreren der vorhergehenden Ansprüche, **dadurch gekennzeichnet, daß** das Oberteil (4) des Gefäßes (1) aus einem flexiblen Material besteht.

9. Vorrichtung nach Anspruch 8, **dadurch gekennzeichnet, daß** das Oberteil (4) die Form eines Faltenbalges (16) aufweist.

10. Vorrichtung nach einem oder mehreren der vorhergehenden Ansprüche, **dadurch gekennzeichnet, daß** das Unterteil (3) mit dem Oberteil (4) verschraubbar ist.

11. Vorrichtung nach einem oder mehreren der Ansprüche 1-8, **dadurch gekennzeichnet, daß** das Unterteil (3) mit dem Oberteil (4) über eine bajonettartige Verriegelung verbindbar ist.

12. Vorrichtung nach einem oder mehreren der vorhergehenden Ansprüche, **dadurch gekennzeichnet, daß** das Unterteil (3) mit sich in Richtung der Längsachse der Auslaßöffnung (2) nach unten erstreckenden Stützfüßen ausgestattet ist.
